# FASCICULE DE BREVET EUROPEEN

(11) **EP 0 842 609 B1**
(45) Date de publication et mention de la délivrance du brevet: **09.07.2003**
(21) Numéro de dépôt: 96203154.8
(22) Date de dépôt: 12.11.1996
(51) Int. Cl.: A23G 9/08, A23G 9/24, A23G 9/02, A23G 9/16

(54) **Dispositif et procédé de dosage et de succion de produits visqueux**
Vorrichtung und Verfahren zum Dosenspenden und zur Absaugung von viskosen Produkten
Device and process for controlled dispensing and succion of viscous products

(43) Date de publication de la demande: 20.05.1998
(73) Titulaire: SOCIETE DES PRODUITS NESTLE S.A., 1800 Vevey (CH)
(72) Inventeur: Cathenaut, Philip Igor, 60000 Beauvais (FR)
(74) Mandataire: Archambault, Jean

(56) Documents cités:
- EP-A- 0 733 308
- DE-B- 1 289 063
- FR-A- 628 815
- GB-A- 746 363
- US-A- 2 195 441
- US-A- 2 212 863
- US-A- 3 529 553
- US-A- 3 632 245
- PATENT ABSTRACTS OF JAPAN vol. 10, no. 280 (C-374), 24 Septembre 1986 & JP 61 100157 A (LOTTE), 19 Mai 1986,

## Description

L'invention a trait à un dispositif de dosage et de succion de produits visqueux dans une ligne de moulage d'articles de confiserie glacée dans des contenants en défilement dans un environnement de solidification des dits produits visqueux.

La réalisation d'articles moulés de confiserie glacée en portions individuelles, notamment de bâtonnets glacés, composés de plusieurs couches concentriques aromatisées différemment, nécessite l'utilisation de la technique dite de coque et noyau, "shell and core".
Elle consiste à laisser durcir par transfert thermique de l'extérieur du moule en contact avec un liquide frigorigène vers l'intérieur, une certaine épaisseur d'une composition liquide et de vider par succion la partie centrale non encore solidifiée. Il reste donc en périphérie une coque solide, vide au centre. Une nouvelle opération combinant le dosage, le durcissement en couche et la succion est ainsi réalisable plusieurs fois. Cette technique est couramment utilisée pour la fabrication de sucettes de glace à l'eau par moulage.

On connaît, par exemple de EP-A-0322469, un procédé de fabrication d'un article glacé moulé multi-couches comprenant à l'intérieur des couches alternées de crème glacée et de feuillets de chocolat en forme de coque. Dans ce procédé, les couches alternées successives de crème glacée et de chocolat sont créées par remplissage de moules, solidification à la périphérie, soutirage du centre encore liquide, pulvérisation de chocolat dans la cavité centrale et renouvellement des opérations précédentes de remplissage et de soutirage. Les dispositifs permettant le remplissage et le soutirage ne sont pas décrits, mais il est clair qu'ils opèrent séparément. De plus, il n'est pas spécifié que le liquide soutiré soit recyclé.

La fabrication de coques moulées de chocolat par remplissage d'alvéoles, solidification de la périphérie, puis soutirage du centre est décrite, par exemple dans US-A-3529553. Bien que le liquide soutiré soit recyclé au moyen d'une pompe vers la trémie d'alimentation, le remplissage et le soutirage s'effectuent séparément au moyen de dispositifs distincts.

EP 733308 a trait à la préparation d'un article de confiserie glacée selon lequel un moule pré-refroidi est rempli de chocolat, le moule rempli de chocolat est soumis à des conditions permettant le durcissement du chocolat pour obtenir une coquille contenue dans le moule et, pendant que le chocolat durcit à proximité des parois du moule, le chocolat encore liquide est soutiré par aspiration pour obtenir une coquille, le procédé étant mis en oeuvre avec un appareil ayant un poste de remplissage des moules avec le chocolat et un poste séparé de soutirage du centre liquide.

Un dispositif particulier de soutirage mobile est également décrit comme faisant partie de l'invention, lequel chemine en même temps que le moule depuis une première position et procède au soutirage du centre liquide se trouvant dans le moule jusqu'à une seconde position et, après avoir effectué le soutirage, revient à la position d'origine de manière à créer une coquille, le dispositif comprenant une soupape d'aspiration intégrée à un tube relié à un réservoir.

US-A-2 195 441 concerne le dosage de crème glacée dans des alvéoles de moules à partir de moyens de dosage multiple à trois voies comprenant des boisseaux basculants et des pistons doseurs disposés en opposition pour équilibrer les volumes dosés par les différentes buses de remplissage.

Le besoin s'est fait sentir d'améliorer la qualité et l'efficacité de réalisation des articles de type coque et noyau ainsi que d'obtenir une meilleure hygiène de nettoyage. Jusqu'à présent, la technique d'aspiration généralement utilisée pour simplifier la fabrication et améliorer l'hygiène de nettoyage a consisté à tirer profit du principe du dosage volumétrique par un piston se déplaçant dans une chambre de remplissage avec une unité de dosage par piste de moulage, une ligne pouvant comprendre jusqu'à 20 pistes. La chambre de remplissage est reliée à une pipette par un tuyau et par l'intermédiaire de clapets et la pipette plonge dans le centre du moule. La coordination se fait par liaison mécanique en deux temps. Dans un premier temps, un déplacement relatif du piston dans sa chambre engendre le vide et le liquide est refoulé à l'intérieur de la chambre sous l'effet de la pression de l'air ambiant, le remplissage cessant lorsque le piston arrive en fin de course au fond de la chambre. Dans un deuxième temps, la pipette ressort du moule cependant que le mouvement du piston dans la chambre s'inverse et, grâce aux clapets, le liquide est expulsé dans un second tuyau et ainsi recyclé, soit dans une cuve tampon intermédiaire, soit directement dans la trémie de dosage. Dans celle-ci se trouve du liquide recyclé et du liquide neuf en complément correspondant au volume déjà dosé. La réussite de l'opération nécessite une parfaite étanchéité du système. L'entretien et les soins à apporter au nettoyage d'autant de systèmes qu'il y a de pistes, multiplié par le nombre d'opérations de succion requises dictées par la nature du produit composite à fabriquer sont considérables. Ces difficultés expliquent que ce système ne soit utilisé que pour doser des sirops peu visqueux constituant des compositions pour glace à l'eau.

Un but de l'invention est de permettre, l'aspiration de liquides de manipulation plus difficile que les compositions pour glace à l'eau, et ceci dans une gamme étendue de températures, parmi lesquels on peut citer:
- les compositions aérées ou foisonnées et visco-élastiques telles que les crèmes glacées,
- les liquides avec morceaux dans la mesure où ils sont eux-mêmes dosables,
- les compositions très visqueuses telles que, par exemple le caramel et les sauces,
- les compositions d'enrobage au chocolat ou analogues qui, sans être très épais se solidifient facilement dans un système à piston et clapets. Dans ce cas, la trémie peut comporter une double paroi isolante ou chauffée.

Un autre but de l'invention est la réalisation du dosage et de l'aspiration avec recyclage au moyen d'un seul dispositif, de construction simple et compacte, facilement nettoyable, sans recourir à des cuves intermédiaires, des pompes et des clapets.

L'invention concerne donc un dispositif de dosage et de succion de produits visqueux dans une ligne de moulage d'articles de confiserie glacée dans des contenants en défilement dans un environnement de solidification des dits produits visqueux, caractérisé par le fait qu'il comprend:
- une trémie de distribution contenant le produit visqueux à doser,
- des moyens de remplissage partiel de la trémie en produit visqueux, reliés à la partie supérieure de la trémie,
- des moyens de liaison de la trémie au vide situés à la partie supérieure de la trémie,
- des moyens de dosage du produit visqueux dans les contenants se présentant sous la trémie, les dits moyens étant situés dans la partie inférieure de la trémie en dessous du niveau de remplissage,
- des moyens de réglage du remplissage de produit visqueux dans la trémie entre un niveau bas et un niveau haut et
- des moyens de succion du produit visqueux, reliés, d'une part à la partie supérieure de la trémie au dessus du niveau de remplissage et d'autre part à une pipette plongeant dans les contenants pour en soutirer le centre non encore solidifié et le recycler dans la trémie.

Le dispositif selon l'invention peut être appliqué à toute machine de congélation d'articles de confiserie glacée telle que, par exemple:
- une machine de congélation en saumure, rectiligne, rotative, ovale ou en mouvement carré,
- une machine de congélation utilisant tout fluide frigorigène liquide, gazeux ou en évaporation, qui baigne les moules ou les asperge pendant plus ou moins longtemps,
- une machine dans laquelle les moules sont transportés par un convoyeur dans un tunnel à air pulsé assurant la surgélation, le convoyeur pouvant être rectiligne ou s'enrouler, par exemple en simple ou en double hélice, applatie ou de révolution,
- toute machine de type précédent dans laquelle le déplacement des moules est continu ou pas à pas.

Le dispositif selon l'invention peut être appliqué d'une manière très simple aux machines existantes en transformant les doseuses de façon à créer une dépressurisation dans la trémie de dosage. Pour ce faire, il suffit de fermer la trémie par un couvercle, de relier la partie supérieure de la trémie à un système de pompe à vide et de raccorder les pipettes de succion directement à la trémie. Ce principe peut s'appliquer à différents types de doseuses telles que, par exemple les doseuses à boisseau de distribution et à cylindres verticaux ou horizontaux, les doseuses à soupapes ou les doseuses à buses plongeantes du type "bottom-up filler" et "pencil filler".

L'invention concerne également un procédé de dosage et de succion de produits visqueux dans une ligne de production par moulage d'articles de confiserie glacée dans des contenants en défilement, dans lequel on remplit les contenants dans un environnement de solidification avec un produit visqueux et on soutire ensuite ledit produit visqueux du centre non encore solidifié par succion, caractérisé en ce qu'il comprend:
- le remplissage des contenants avec le produit visqueux depuis une trémie grâce à des moyens de dosage disposés dans la partie inférieure de la trémie,
- le soutirage du produit visqueux non solidifié du centre des contrenants grâce à une pipette capable de monter et de descendre mécaniquement,
- le recyclage du produit visqueux non solidifié par un conduit relié à ladite pipette dans la partie supérieure de la trémie de dosage du produit visqueux,
en ce que l'opération de soutirage est réalisée au moyen de la pression réduite qui règne dans la trémie de dosage du produit visqueux, sans l'emploi de moyens de pompage additionnels et
que lesdites opérations de dosage et de soutirage ont lieu d'une manière concommitante à l'aide d'un seul dispositif.

Selon l'invention, pour fabriquer des articles moulés de confiserie glacée composites, notamment des sucettes glacées multi-parfums, on remplit des moules en défilement dans un environnement de solidification, avec une composition à glacer, l'on solidifie la composition à la périphérie, l'on soutire le centre non encore solidifié et l'on répète les opérations de dosage et de soutirage à l'aide d'un seul dispositif jusqu'à obtenir le nombre de couches successives souhaité.

L'invention sera décrite plus en détails à titre d'illustration l'aide des dessins annexés dans lesquels:
la figure 1 est une vue schématique d'une doseuse dont la trémie est placée directement sur le boisseau de dosage avec les cylindres fixés latéralement à l'horizontale,
la figure 2 est une vue schématique d'une doseuse dont la trémie est décalée latéralement par rapport au boisseau pour laisser la place aux cylindres fixés verticalement sur le boisseau,
la figure 3 est une vue schématique d'une doseuse sans cylindre dont la trémie est débouche directement sur le boisseau, mais où les passages sont obturés par des soupapes et
la figure 4 représente une vue schématique du dispositif en situation sur une piste d'une machine rectiligne de fabrication de sucettes glacées.

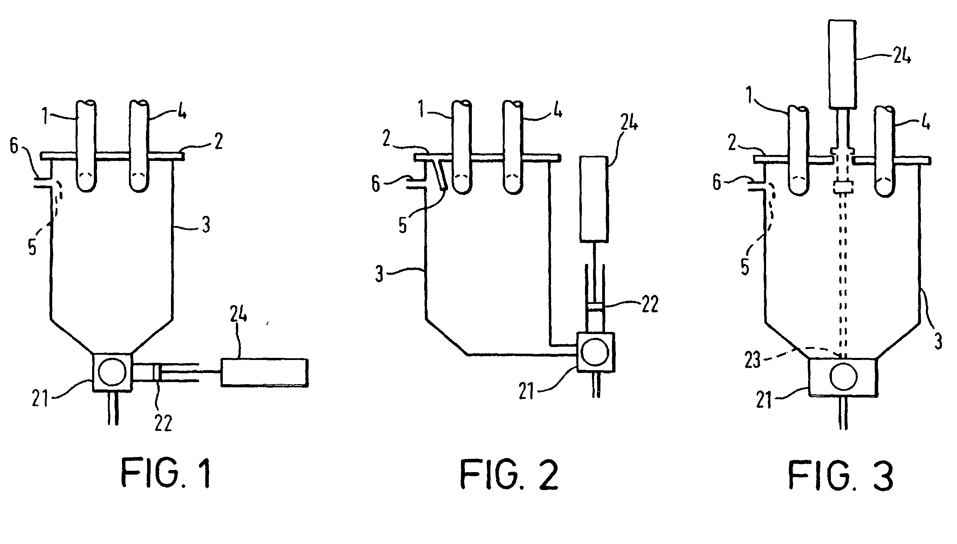

Aux figures 1 à 4, une conduite d'alimentation de composition à glacer 1 est connectée verticalement sur le couvercle 2 ou de préférence sur le côté de la trémie 3, de manière à pouvoir dégager facilement le couvercle 2 pour le nettoyage. Une conduite de vide 4, est reliée d'une part à la trémie 3, comme indiqué précédemment et d'autre part à une pompe à vide non représentée. La trémie 3 peut comporter des déflecteurs 5 pour éviter l'aspiration directe des liquides recyclés ou complémentaires. Les déflecteurs 5 peuvent aussi être fixés sous le couvercle (fig. 2). A la partie frontale supérieure de la trémie est connecté un tuyau souple 6 dont l'autre extrémité est reliée à une pipette 7.

Le mélangeur 8 permet d'obtenir un mélange homogène de composition "neuve" et de composition recyclée. Les deux sondes de niveau 10 (niveau bas et niveau haut) maintiennent un niveau de liquide stationnaire dans la trémie 3 en commandant une vanne électromagnétique 11 de manière à alimenter la trémie en composition neuve à la demande. Ces sondes de niveau peuvent se situer soit sur le couvercle 2, soit sur le côté de la trémie 3. Le couvercle 2 est avantageusement en matériau incassable, par exemple en acier inoxydable. Pour contrôler visuellement le bon fonctionnement du système un regard 12 est prévu sur le côté de la trémie 3. Une sonde de pression 13, placée sur la conduite de vide 4 au voisinage de la trémie 3, permet d'ajuster exactement le niveau de vide en fonction de la viscosité de la composition à glacer et de la cadence de la machine. Une vanne électromagnétique (non représentée) peut être disposée sur la conduite de vide 4. Celle-ci permet le cas échéant de moduler le niveau de vide en fonction des phases de remplissage et de soutirage des chambres.

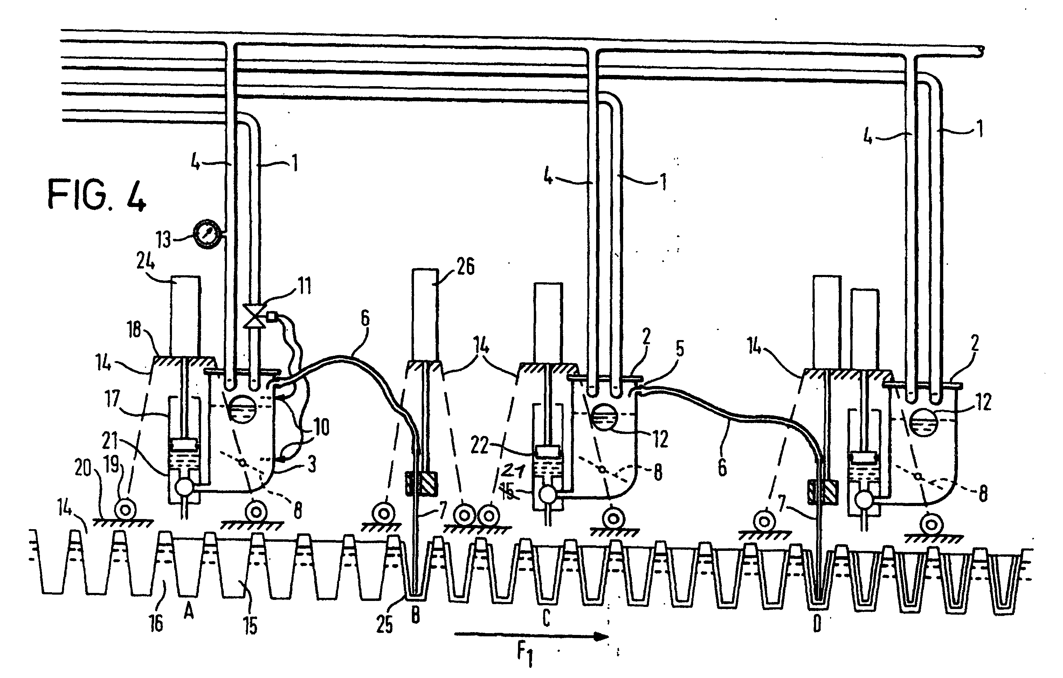

A la figure 4, le dispositif selon l'invention est en situation de production sur une ligne de fabrication de sucettes glacées multi-parfums. Le convoyeur sans fin 14 transporte les moules 15 suivant la flèche f₁ pas à pas dans un bac de saumure de congélation 16. Plusieurs postes de dosage et d'aspiration successifs sont représentés et leur fonctionnement est identique. La doseuse 17 et la trémie associée 3 sont montées sur un bâti 18, mobile en translation par l'intermédiaire des galets 19 roulant sur les rails 20. En A, on remplit un moule refroidi 15 de la composition à glacer par le boisseau à 3 voies 21 au moyen du piston de dosage 22 (fig. 1 et 2) ou de la soupape 23 (fig. 3) actionnés par le cylindre 24. Après cheminement dans le milieu de refroidissement, la composition se solidifie à la périphérie du moule 15 en une couche 25. En B, le centre encore liquide est soutiré par la pipette 7 et celle-ci est remontée hors du moule au moyen du vérin 26. Une composition à glacer de nature différente peut alors être introduite en C, puis le centre soutiré en D et ainsi de suite jusqu'à obtenir le nombre de couches successives souhaité en répétant les opérations précédentes. Par souci de simplification, les sondes 10 et la vanne électromagnétique 13 n'ont été représentées que dans le cas de la première doseuse.

Tel que représenté à la figure 4, les éléments de dosage et d'aspiration en fin de fabrication, comprenant la doseuse et l'ensemble pipette/vérin associé au dosage précédent sont sur un même bâti mobile 18, comme montré en D, alors qu'habituellement, les pipettes d'aspiration sont montées sur des supports indépendants. Cet agencement permet un gain de place appréciable, en particulier sur les machines courtes. Dans la représentation de la figure 4, ne figurent pas les opérations ultérieures de pose d'un bâtonnet, de démoulage et d'enveloppage des articles finis.

Le dispositif et le procédé selon l'invention présentent les avantages substantiels suivants par rapport aux techniques connues, cités à titre d'exemple:
- un contrôle manométrique précis de l'aspiration fonction de la viscosité du produit à aspirer,
- une efficacité de l'aspiration indépendante de la cadence de la machine,
- la possibilité de fabriquer de nouveaux produits multicouches,
- l'aspiration de la composition à glacer depuis la cuve de stockage sans recourir à l'utilisation d'une pompe,
- un gain de place sur la ligne qui permet de réduire le temps de congélation,
- un encombrement réduit par diminution du nombre d'équipements sur la ligne,
- des pipettes simplifiées au maximum, libres sur leur support, ce qui permet un réglage rapide et facile de leur course et
- un nettoyage très simple des éléments d'aspiration garantissant l'hygiène du procédé.

Le dispositif et le procédé ont été décrits en liaison avec la fabrication de sucettes glacées. Ils sont bien entendu applicables à la fabrication d'articles moulés de nature différente tels que par exemple des cônes ou des pots. Le dispositif a été décrit en liaison avec une piste de dosage pour des raisons de simplification. Bien entendu, une machine en situation de fabrication peut comprendre jusqu'à 20 pistes de dosage et d'aspiration en parallèle.

## Revendications

1. Dispositif de dosage et de succion de produits visqueux dans une ligne de moulage d'articles de confiserie glacée dans des contenants en défilement dans un environnement de solidification des dits produits visqueux, **caractérisé par le fait qu'**il comprend:
une trémie de distribution contenant le produit visqueux à doser,
des moyens de remplissage partiel de la trémie en produit visqueux, reliés à la partie supérieure de la trémie,
des moyens de liaison de la trémie au vide situés à la partie supérieure de la trémie,
des moyens de dosage du produit visqueux dans les contenants se présentant sous la trémie, les dits moyens étant situés dans la partie inférieure de la trémie en dessous du niveau de remplissage,
des moyens de réglage du remplissage de produit visqueux dans la trémie entre un niveau bas et un niveau haut et
des moyens de succion du produit visqueux, reliés, d'une part à la partie supérieure de la trémie au dessus du niveau de remplissage et d'autre part à une pipette plongeant dans les contenants pour en soutirer le centre non encore solidifié et le recycler dans la trémie.

2. Dispositif selon la revendication 1, **caractérisé par le fait que** les moyens de liaison de la trémie au vide comprennent un élément de réglage du vide sous forme d'une sonde de pression.

3. Dispositif selon la revendication 1, **caractérisé par le fait que** les moyens de réglage du niveau de remplissage entre une valeur basse et une valeur haute consistent en deux sondes de niveau commandant une vanne électromagnétique comprise dans les moyens de remplissage de la trémie.

4. Dispositif selon la revendication 1, **caractérisé par le fait que** les moyens de dosage du produit visqueux dans les contenants comprennent une vanne à trois voies, une chambre de dosage et un vérin de distribution.

5. Dispositif selon la revendication 1, **caractérisé par le fait que** les moyens de succion sont solidaires d'un dispositif de monte et baisse assurant une descente de la pipette jusqu'au fond des contenants et une remontée de la dite pipette après soutirage du centre non encore solidifié.

6. Dispositif selon la revendication 1, **caractérisé par le fait que** la trémie est pourvue de moyens de mélange du produit visqueux recyclé avec le produit visqueux amené.

7. Dispositif selon la revendication 1, **caractérisé par le fait que** la trémie comporte un regard de contrôle du niveau de produit visqueux.

8. Machine de fabrication d'articles de confiserie glacée, **caractérisée par le fait qu'**elle comprend un dispositif selon l'une des revendications 1 à 7.

9. Procédé de dosage et de succion de produits visqueux dans une ligne de moulage d'articles de confiserie glacée dans des contenants en défilement, dans lequel on remplit les contenants dans un environnement de solidification avec un produit visqueux et on soutire ensuite ledit produit visqueux du centre non encore solidifié par succion, **caractérisé en ce qu'**il comprend:
- le remplissage des contenants avec le produit visqueux depuis une trémie grâce à des moyens de dosage disposés dans la partie inférieure de la trémie,
- le soutirage du produit visqueux non solidifié du centre des contrenants grâce à une pipette capable de monter et de descendre mécaniquement,
- le recyclage du produit visqueux non solidifié par un conduit relié à ladite pipette dans la partie supérieure de la trémie de dosage du produit visqueux,
**en ce que** l'opération de soutirage est réalisée au moyen de la pression réduite qui règne dans la trémie de dosage du produit visqueux, sans l'emploi de moyens de pompage additionnels et
que lesdites opérations de dosage et de soutirage ont lieu d'une manière concommitante à l'aide d'un seul dispositif.

10. Procédé de fabrication d'articles de confiserie glacée composites, notamment de sucettes glacées multi-parfums, dans lequel on remplit des contenants en défilement dans un environnement de solidification, avec une composition à glacer, l'on solidifie la composition à la périphérie et l'on soutire le centre non encore solidifié, **caractérisé en ce qu'**il comprend:
- le remplissage des contenants avec le produit visqueux depuis une trémie grâce à des moyens de dosage disposés dans la partie inférieure de la trémie,
- le soutirage du produit visqueux non solidifié du centre des contrenants grâce à une pipette capable de monter et de descendre mécaniquement,
- le recyclage du produit visqueux non solidifié par un conduit relié à ladite pipette dans la partie supérieure de la trémie de dosage du produit visqueux,
**en ce que** l'opération de soutirage est réalisée au moyen de la pression réduite qui règne dans la trémie de dosage du produit visqueux, sans l'emploi de moyens de pompage additionnels,
que lesdites opérations de dosage et de soutirage ont lieu d'une manière concommitante à l'aide d'un seul dispositif et
que l'on répète ces opérations jusqu'à obtenir le nombre de couches successives souhaité.

## Patentansprüche

1. Vorrichtung zum Zudosieren und Absaugen von viskosen Produkten in einer Strecke zum Formgießen von Eiskonfekt in Behälter, die eine Umgebung durchlaufen, in der diese viskosen Produkte erstarren, **dadurch gekennzeichnet, daß** sie folgendes umfaßt:
einen das zuzudosierende viskose Produkt enthaltenden Abgabebehälter,
Mittel zum partiellen Befüllen des Abgabebehälters mit viskosem Produkt, die mit dem oberen Teil des Abgabebehälters verbunden sind,
Mittel zur Verbindung des Abgabebehälters mit Unterdruck, die im oberen Teil des Abgabebehälters angeordnet sind, Mittel zum Zudosieren des viskosen Produkts in die unter den Abgabebehälter gebrachten Behälter, wobei diese Mittel im unteren Teil des Abgabebehälters unterhalb des Füllstandes angeordnet sind,
Mittel zur Regelung der Füllung des viskosen Produkts in den Abgabebehälter zwischen einem unteren Stand und einem oberen Stand und
Mittel zum Absaugen des viskosen Produkts, die einerseits mit dem oberen Teil des Abgabebehälters oberhalb des Füllstandes und andererseits mit einer Pipette verbunden sind, die in die Behälter eintaucht, um in ihnen den noch nicht erstarrten Kern abzusaugen und in den Abgabebehälter zu rezyklieren.

2. Vorrichtung nach Anspruch 1, **dadurch gekennzeichnet, daß** die Mittel zum Verbinden des Abgabebehälters mit dem Unterdruck ein Element zum Regeln des Unterdrucks in Form eines Druckfühlers umfassen.

3. Vorrichtung nach Anspruch 1, **dadurch gekennzeichnet, daß** die Mittel zur Regelung des Füllstandes zwischen einem unteren Wert und einem oberen Wert aus zwei Standsfühlern bestehen, die ein in den Mitteln zum Füllen des Abgabebehälters enthaltenes Magnetventil steuern.

4. Vorrichtung nach Anspruch 1, **dadurch gekennzeichnet, daß** die Mittel zum Zudosieren des viskosen Produktes in die Behälter ein Dreiwegeventil, eine Zudosierkammer und einen Abgabezylinder umfassen.

5. Vorrichtung nach Anspruch 1, **dadurch gekennzeichnet, daß** die Absaugmittel mit einer Hebe- und Senkeinrichtung fest verbunden sind, die eine Abwärtsbewegung der Pipette bis zum Boden der Behälter und eine Aufwärtsrückbewegung der Pipette nach dem Abziehen des noch nicht erstarrten Kerns gewährleistet.

6. Vorrichtung nach Anspruch 1, **dadurch gekennzeichnet, daß** der Abgabebehälter mit Mitteln zum Mischen des rezyklierten viskosen Produkts mit dem zugeführten viskosen Produkt versehen ist.

7. Vorrichtung nach Anspruch 1, **dadurch gekennzeichnet, daß** der Abgabebehälter ein Fenster zur Kontrolle des Stands des viskosen Produkts aufweist.

8. Maschine zur Herstellung von Eiskonfekt, **dadurch gekennzeichnet, daß** sie eine Vorrichtung nach einem der Ansprüche 1 bis 7 aufweist.

9. Verfahren zum Zudosieren und Absaugen von viskosen Produkten in einer Strecke zum Formgießen von Eiskonfekt in vorbeilaufenden Behältern, bei dem man die Behälter in einer eine Erstarrung bewirkenden Umgebung mit einem viskosen Produkt füllt und dann das viskose Produkt des noch nicht erstarrten Kerns durch Absaugen abzieht, **dadurch gekennzeichnet, daß** es folgendes umfaßt:
- die Füllung der Behälter mit dem viskosen Produkt aus einem Abgabebehälter mit Hilfe von Zudosiermitteln, die im unteren Teil des Abgabebehälters angeordnet sind,
- das Abziehen des nicht erstarrten viskosen Produkts des Kerns der Behälter mit Hilfe einer Pipette, die mechanisch auf- und abwärts bewegt werden kann,
- die Rezyklierung des nicht erstarrten viskosen Produkts durch eine mit der Pipette verbundene Leitung in den oberen Teil des Abgabebehälters zum Zudosieren des viskosen Produkts,
daß der Arbeitsgang des Abziehens mit Hilfe des verminderten Drucks, der in dem Abgabebehälter zum Zudosieren des viskosen Produkts herrscht, ohne Verwendung von zusätzlichen Pumpmitteln vorgenommen wird, und
daß die Arbeitsgänge des Zudosierens und des Abziehens sich begleitend mit Hilfe einer einzigen Vorrichtung durchgeführt werden.

10. Verfahren zur Herstellung von Mehrschicht-Eiskonfekt, insbesondere von Eislutschern mit mehreren Geschmacksrichtungen, bei dem man vorbeilaufende Behälter in einer eine Erstarrung bewirkenden Umgebung mit einer Eiszusammensetzung füllt, die Zusammensetzung am Umfang erstarren läßt und den noch nicht erstarrten Kern abzieht, **dadurch gekennzeichnet, daß** es folgendes umfaßt:
- die Füllung der Behälter mit dem viskosen Produkt aus einem Abgabebehälter mit Hilfe von Zudosiermitteln, die im unteren Teil des Abgabebehälters angeordnet sind,
- das Abziehen des nicht erstarrten viskosen Produkts des Kerns der Behälter mit Hilfe einer Pipette, die mechanisch auf- und abwärtsbewegt werden kann,
- die Rezyklierung des nicht erstarrten viskosen Produkts durch eine mit der Pipette verbundene Leitung in den oberen Teil des Abgabebehälters zum Zudosieren des viskosen Produkts,
daß der Arbeitsgang des Abziehens mit Hilfe des verminderten Drucks, der in dem Abgabebehälter zum Zudosieren des viskosen Produkts herrscht, ohne Verwendung von zusätzlichen Pumpmitteln vorgenommen wird,
daß die Arbeitsgänge des Zudosierens und des Abziehens sich begleitend mit Hilfe einer einzigen Vorrichtung durchgeführt werden, und
daß man diese Arbeitsgänge wiederholt, bis man die gewünschte Anzahl von aufeinanderfolgenden Schichten erhält.

## Claims

1. Device for the metering and suction of viscous products in a line for moulding frozen confectionery articles in containers passing through a medium for solidifying the said viscous products, **characterized in that** it comprises :
- a distribution hopper containing the viscous product to be metered.
- means for partially filling the hopper with the viscous product, connected to the upper part of the hopper,
- means for connecting the hopper to a vacuum situated at the upper part of the hopper,
- means for metering the viscous products into containers presented under the hopper, the said means being situated in the lower part of the hopper below the filling level,
- means for adjusting the filling of the viscous product in the hopper between a low level and a high level and
- means for sucking out the viscous product, connected, on the one hand to the upper part of the hopper above the filling level and on the other hand to a pipette dipping into the containers for withdrawing the still unsolidified centre thereof and recycling it to the hopper.

2. Device according to claim 1, **characterized in that** the means for connecting the hopper to the vacuum include a component for adjusting the vacuum in the form of a pressure sensor.

3. Device according to claim 1, **characterized in that** the means for adjusting the filling level between a low value and a high value consist of two level sensors controlling an electromagnetic valve included in the means for filling the hopper.

4. Device according to claim 1, **characterized in that** the means for metering the viscous product into the containers comprise a three-way valve, a metering chamber and a distribution thrustor.

5. Device according to claim 1, **characterized in that** the means of suction are firmly attached to a raising and lowering device ensuring that the pipette descends to the bottom of the containers and that the said pipette rises after the still unsolidified centre is withdrawn.

6. Device according to claim 1, **characterized in that** the hopper is provided with means for mixing the recycled viscous product with the viscous product supplied.

7. Device according to claim 1, **characterized in that** the hopper has a sight glass for checking the level of the viscous product.

8. Machine for manufacturing articles of frozen confectionery, **characterized in that** it includes a device according to one of claims 1 to 7.

9. Process for the metering and suction of viscous products in a line for moulding articles of frozen confectionery in containers passing in line, wherein the containers are filled in a soldifying environment with a viscous product and the said viscous product is then withdrawn from the still unsoldified centre by suction, **characterized in that** it comprises:
- filling the containers with the viscous product from a hopper by the use of metering means disposed in the lower part of the hopper,
- withdrawing the unsolidified viscous product from the centre of the containers by means of a pipette capable of rising and falling mechanically,
- recycling the unsolidified viscous product through a pipe connected to the said pipette into the upper part of the hopper for metering the viscous product,
**in that** the withdrawing operation is carried out by means of the reduced pressure existing in the hopper for metering the viscous product, without the use of additional pumping means, and
that the said metering and withdrawing operations occur concomitantly with the aid of a single device.

10. Process for manufacturing composite articles of frozen confectionery, in particular multi-flavoured ice lollies wherein the containers are filled as they pass through a solidification environment with a composition to be frozen, the composition is solidified at the periphery and the still unsolidified centre is withdrawn, **characterized in that** it comprises:
- filling the containers with the viscous product from a hopper by the use of metering means disposed in the lower part of the hopper,
- withdrawing the unsolidified viscous product from the centre of the containers by means of a pipette capable of rising and falling mechanically,
- recycling the unsolidified viscous product through a pipe connected to the said pipette into the upper part of the hopper for metering the viscous product,
**in that** the withdrawing operation is carried out by means of the reduced pressure existing in the hopper for metering the viscous product, without the use of additional pumping means, and
that the said metering and withdrawing operations occur concomitantly with the aid of a single device and
that these operations are repeated until the desired number of successive layers are obtained.
